# EUROPEAN PATENT APPLICATION

(11) **EP 4 834 457 A1**
(43) Date of publication of application: **04.11.2026**
(21) Application number: 26164005.6
(22) Date of filing: 11.03.2026
(51) Int. Cl.: B01D 41/02, B01D 29/00, B01D 39/06

(54) **FILTER MEDIA RECYCLING APPARATUS**

(30) Priority: 30.04.2025 JP 2025075200
(71) Applicant: Shinsen Industry Co., Ltd., Osaka, Osaka 550-0015 (JP)
(72) Inventor: Konosuke, Kitabayashi, Osaka 596-0807 (JP)
(74) Representative: Wagner & Geyer

(57) **Abstract**

A filter media recycling apparatus includes a water storage tank 8, first and second pressure pumps 21, 22 that suck and pressurize water stored in the water storage tank, a first jet pump 1A sucks and feeds filter media from a filtration tank X to a downstream side, a classifying unit 3 classifies the filter media, a drum-type cleaner 4 cleans the filter media classified by the classifying unit, a second jet pump aB sucks and feeds the filter media to the downstream side, and an inclined screen 5 that separates water and dirt from the filter media, and where a large number of water permeable holes composed of through holes or a large number of water permeable strips 57 composed of through slits are dispersedly arranged in the inclined screen, and the inclined screen is provided above the water storage tank such that water flows into the water storage tank.

## Description

### FIELD

The present invention relates to a filter media recycling apparatus for cleaning, with a jet pump, granular filter media that fills a filtration tank for water filtration and, in particular, to a filter media recycling apparatus for cleaning, with two jet pumps, the filter media twice.

### BACKGROUND

In general, a filtration tank or a filtration basin used for filtration of clean water, industrial water, drainage, etc., includes a stack of filtration layers, including anthracite as an uppermost layer, below which iron- and manganese-free material and/or filtration sand are provided, and filtration gravel as a lowermost layer (in this application, for the sake of convenience, anthracite, iron- and manganese-free material, and filtration sand shall be referred to collectively as "filtration material," and filtration material and filtration gravel supporting the filtration material shall be referred to collectively as "filter media"). There have been known techniques to recycle filter media to which dirt has adhered during filtration using a recycling apparatus with a jet pump (see Japanese Patent Laid-Open No. H5-253420 and Japanese Patent Laid-Open No. 2020-078785).

For example, Japanese Patent Laid-Open No. H5-253420 proposes a filter media recycling apparatus for cleaning filter media with jetted water through a jet pump while the jet pump sucks and feeds the filter media from a filtration tank toward a classifying unit for particle size-based classification. The recycling apparatus includes a drum-type cleaner having a drum-type sieve that washes away dirt and the like peeled off from filtration material (such as anthracite, which has been precisely classified from filtration sand, etc.), through the finest sieve in the classifying unit.

However, the filter media recycling apparatus of Japanese Patent Laid-Open No. H5-253420 suffers from a problem in that dirt, if firmly attached to the filtration material, cannot be sufficiently removed.

Then, Japanese Patent Laid-Open No. 2020-078785 proposes a filter media recycling apparatus including a first jet pump that sucks and feeds filter media from a filtration tank to a classifying unit as well as a second jet pump that sucks and jets filtration material cleaned by a drum-type cleaner.

However, the filter media recycling apparatus of Japanese Patent Laid-Open No. 2020-078785 is configured such that a container bag that houses filtration material fed from the drum-type cleaner is housed in a permeation water tank, and a large amount of water fed from the second jet pump together with the filtration material is allowed to permeate the container bag and then stored in the permeation water tank. The filter media recycling apparatus of Japanese Patent Laid-Open No. 2020-078785 suffers from a problem that the permeation water tank is required to have a capacity large enough to store a large amount of water therein, and that, in order to prevent wasting water, such a large amount of water stored in the permeation water tank is required to be pumped back to a source water storage tank that stores water used for driving the jet pumps.

The present invention has been made in view of the problems above, and an object thereof is to provide a filter media recycling apparatus that does not need a large permeation water tank for storing water fed from a drum-type cleaner, in addition to a water storage tank that stores water used for mixed air jet driving.

### SUMMARY

The invention made to solve the problems above provides a filter media recycling apparatus including a water storage tank, first and second pressure pumps that suck and pressurize water stored in the water storage tank, a first jet pump driven by drive water pressurized by the first pressure pump to suck and feed to-be-recycled filter media from a filtration tank to a downstream side, a classifying unit having a plurality of classifying stages that classifies the filter media, a drum-type cleaner having a cylindrical rotary sieve that receives the filter media classified by the classifying unit therein and cleans the filter media with water while rotating about an axis, a second jet pump driven by drive water pressurized by the second pressure pump to suck and feed the filter media to the downstream side, and an inclined screen that separates water and dirt from the filter media fed by the second jet pump, and where the inclined screen is inclined such as to allow the filter media to slide down on an upper surface thereof, a large number of water permeable holes composed of through holes or a large number of water permeable strips composed of through slits are dispersedly arranged in the inclined screen, the inclined screen is provided above the water storage tank such that water falling through the water permeable holes or the water permeable strips flows into the water storage tank.

Thus, the filter media recycling apparatus according to the present invention is configured such that the filter media is fed to the inclined screen provided above the water storage tank, and the water separated from the filter media sliding on the inclined screen and falling from the inclined screen is allowed to flow into the water storage tank. Therefore, it is not necessary to provide a separate large permeation water tank to store water fed from the drum-type cleaner, in addition to the water storage tank that stores water used for driving the jet pumps, and accordingly, a larger pump for returning a large amount of water from the permeation water tank to the water storage tank is also no longer necessary.

The filter media recycling apparatus according to the present invention may be configured so that the first jet pump feeds the filter media to the classifying unit, the classifying unit classifies the filter media fed from the first jet pump, the second jet pump sucks and feeds the filter media cleaned by the drum-type cleaner to the inclined screen, and the inclined screen separates water and dirt from the filter media fed by the second jet pump.

The filter media recycling apparatus according to the present invention may also be configured so that the first jet pump feeds the filter media to the inclined screen, the inclined screen separates water and dirt from the filter media fed by the first jet pump, the second jet pump sucks and feeds the filter media fed from the inclined screen to the classifying unit, and the classifying unit classifies the filter media fed from the second jet pump.

Thus, by feeding the filter media cleaned by the first jet pump not to the classifying unit but to the inclined screen, and further feeding the filter media by the second jet pump from the inclined screen to the classifying unit, cleaning through the first and second jet pumps is completed before the filter media reaches the drum-type cleaner. Therefore, it is not necessary to use the jet pump to take the filter media out of the drum-type cleaner, and accordingly, only a small amount of water is fed from the drum-type cleaner and a large water storage tank for storing such a small amount of water is also not necessary. Also, this configuration allows filter media (filtration material) with a small particle size that should be classified by the finest sieve in the classifying unit to be prevented from flowing, due to adhesion of dirt, into a classifying stage having a coarser sieve for classification of filtration sand, etc., and also, although some filtration material such as anthracite and iron- and manganese-free material etc., has a size that cannot pass the finest sieve in the classifying unit even before it is contaminated, it is possible to clean such filtration material twice.

The inclined screen preferably includes a covering sheet composed of flexible material capable of covering at least an upstream side portion of the upper surface from above the filter media sliding on the upper surface. By this configuration, it is possible to prevent scatter of filtration material, and also, more water, dirt, and/or fine sand can be removed from the filter media by reducing, due to the weight of the covering sheet, the speed of the filtration material sliding down on the inclined screen. It is noted that fine sand generally refers to fine sand having a particle size of 0.35 mm or less and, when returned to the filtration tank together with recycled filter media, clogs the filter media and hinders filtration.

The covering sheet is preferably composed of transparent material. By this configuration, it is possible to monitor the state of the filter media through the covering sheet.

It is preferable that the water storage tank, the first and second pressure pumps, the first and second jet pumps, the classifying unit, the drum-type cleaner, and the inclined screen are mounted on a platform of a truck, and the inclined screen is inclined outward in a plan view of the platform. This makes it easy to visually monitor the filtration material sliding down on the upper surface of the inclined screen from outside the platform of the truck.

### BRIEF DESCRIPTION OF THE DRAWINGS

Fig. 1 is a flow diagram of a filter media recycling apparatus according to a first embodiment of the present invention.
Fig. 2 is a side view illustrating an example in which the filter media recycling apparatus according to the first embodiment of the present invention is mounted on a platform of a truck.
Figs. 3A, 3B, 3C, and 3D are, respectively, a front view, a rear view, a vertical cross-sectional view, and a partially enlarged main-part front view of an inclined screen illustrated in Fig. 1.
Fig. 4 is a vertical cross-sectional view of a jet pump illustrated in Fig. 1.
Fig. 5 is a flow diagram of a filter media recycling apparatus according to a second embodiment of the present invention.
Fig. 6 is a side view illustrating an example in which the filter media recycling apparatus according to the second embodiment of the present invention is mounted on a platform of a truck.

### DETAILED DESCRIPTION

Hereinafter, embodiments of the present invention shall be described in detail with reference to the accompanying drawings as appropriate. However, the present invention is not limited to the following embodiments, and appropriate modifications can be made within the scope of the spirit of the present invention.

### (First Embodiment)

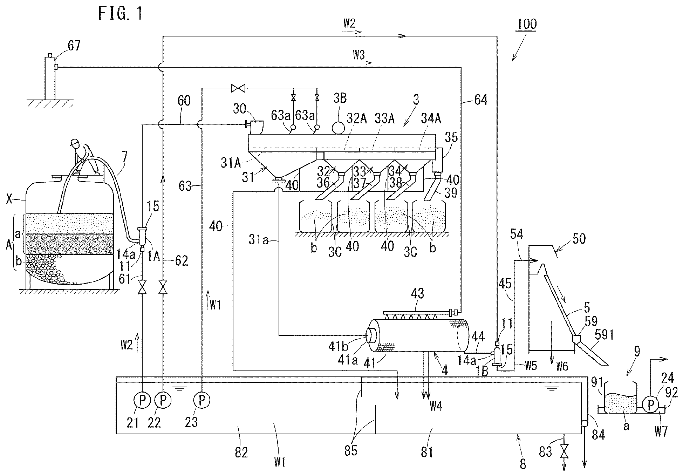

Fig. 1 illustrates a filter media recycling apparatus 100 according to a first embodiment of the present invention. The filter media recycling apparatus 100 includes first and second jet pumps 1A, 1B, first and second pressure pumps 21, 22, a classifying unit 3, a drum-type cleaner 4, an inclined screen 5, a water storage tank 8, and a recycled filtration material collecting unit 9. The inclined screen 5 is provided inside an inclined screen unit 50.

With the configuration above, the filter media recycling apparatus 100 is provided to suck and discharge filter media A composed of filtration material a and filtration gravel b in a filtration tank X, separate the filtration material a and the filtration gravel b, classify the filtration gravel b based on the particle size, and peel off and clean dirt attached or adhered to the filtration material a to recycle the filter media A. It is noted that the filtration material a is composed of anthracite, iron- and manganese-free material such as manganese zeolite, filtration sand, etc., which plays a main part of filtration and the filtration gravel b is gravel forming a layer that supports the filtration material a.

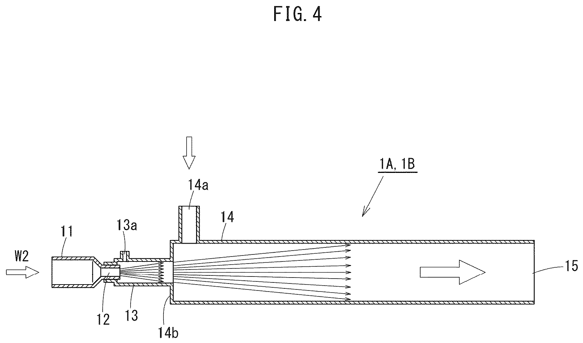

The first and second jet pumps 1A, 1B are composed of so-called mixed air jet pumps, and as illustrated in Fig. 4, include a pressurized water introduction pipe 11 for introduction of pressurized water (drive water) W2 therethrough, an injection nozzle 12 provided by tapering a leading end of the pressurized water introduction pipe 11, a mixed air pipe 13 continued to the downstream side (right side in Fig. 4) of the injection nozzle 12 and having an inner diameter slightly larger than that of the injection nozzle 12, and a negative pressure generation pipe 14 continued to the downstream side of the mixed air pipe 13 and having a diameter larger than that of the mixed air pipe 13.
The mixed air pipe 13 has an intake port 13a opened in a pipe wall, and the negative pressure generation pipe 14 has a suction port 14a opened in a pipe wall near a bottom portion 14b and a rear end opening 15.

As illustrated in Fig. 1, the first jet pump 1A and the second jet pump 1B are driven by the first pressure pump 21 and the second pressure pump 22, respectively. The first and second pressure pumps 21, 22 pressurize circulating water W1 stored in a fresh water tank 82 of the water storage tank 8 to obtain the pressurized water W2, and introduce the pressurized water W2 into the pressurized water introduction pipe 11 of each of the first and second jet pumps 1A, 1B.
As illustrated in Fig. 4, the pressurized water W2 introduced into the pressurized water introduction pipe 11 is jetted as jet blast through the injection nozzle 12, which has a diameter smaller than that of the pressurized water introduction pipe 11, into the mixed air pipe 13 and depressurized to generate negative pressure inside the mixed air pipe 13 and the negative pressure generation pipe 14. Thus, since the negative pressure generated in the mixed air pipe 13 causes air in the atmosphere to be sucked through the intake port 13a into the mixed air pipe 13, and the jet blast is surrounded by the air, and can be kept at high speed. Also, the negative pressure generated inside the negative pressure generation pipe 14 causes the filter media A to be sucked through the suction port 14a.

In this embodiment, as illustrated in Fig. 1, the first jet pump 1A is configured such that the pressurized water introduction pipe 11 is in communication with the first pressure pump 21, the suction port 14a is in communication with the filtration tank X via a suction hose 7, the rear end opening 15 is in communication with a filter media load port 30 of the classifying unit 3 via a filter media feed pipe 60, and thus configured to be driven by the pressurized water W2 from the first pressure pump 21 to suck the filter media A in the filtration tank X and feed to the classifying unit 3 while cleaning.

On the other hand, as illustrated in Fig. 1, the second jet pump 1B is configured such that the pressurized water introduction pipe 11 is in communication with the second pressure pump 22, the suction port 14a is in communication with an interior of a rotary sieve 41 of the drum-type cleaner 4, the rear end opening 15 is in communication with the inclined screen 5 via a feed pipe 45, and thus configured to be driven by the pressurized water W2 from the pressurized water introduction pipe 11 to suck and feed the filtration material a from the drum-type cleaner 4 to the inclined screen 5.

The first and second pressure pumps 21, 22 suck and pressurize the circulating water W1 in the water storage tank 8 to obtain the pressurized water W2, and feed the pressurized water W2 through pressurized water supply pipes 61, 62 into the first and second jet pumps 1A, 1B, respectively.

The classifying unit 3 includes a plurality of (five in the illustrated example) hoppers 31, 32, 33, 34, 35. The hoppers 31, 32, 33, 34 have sieves 31A, 32A, 33A, 34A that screen respective upper openings. The sieves 31A, 32A, 33A, 34A are disposed in this order, from finer to coarser. The sieves 31A, 32A, 33A, and 34A are configured to be vibrated integrally by a vibration motor 3B and, while feeding the filter media A loaded through the filter media load port 30 toward the subsequent coarser sieves, classify the filtration material a, starting from that having a smaller particle size, sequentially into the hoppers 31, 32, 33, 34, and 35. Although not particularly limited, stainless steel sieves are preferably used as the sieves 31A, 32A, 33A, 34A.
As for the size of filtration material to be classified into each hopper, the filtration material a having an effective diameter of about 0.6 mm is classified into the hopper 31, and the filtration gravel b having a particle diameter of about 3 to 25 mm is classified into the hoppers 32, 33, 34, 35, for example. The hoppers 31 to 34 are each provided with an excess water drain pipe 40 for draining excess water to a muddy water tank 81.

Also, circulating water injection nozzles 63a, 63a to inject circulating water to the filtration material a are provided above the sieve 31A. To the circulating water injection nozzle 63a, the circulating water W1 stored in the fresh water tank 82 of the water storage tank 8 is circularly supplied from a pump 23 provided in the water storage tank 8 through a circulating water supply pipe 63. The circulating water W1 circulates from the fresh water tank 82 through the classifying unit 3, the drum-type cleaner 4, and the muddy water tank 81 to the fresh water tank 82.

A lower end of the hopper 31 is coupled to the drum-type cleaner 4 by a filtration material feed pipe 31a, and discharge pipes 36, 37, 38, 39 through which the classified filtration gravel b is discharged are provided at lower ends of the hoppers 32, 33, 34, 35.

The drum-type cleaner 4 includes the rotary sieve 41 and a fresh water injection pipe 43. The rotary sieve 41 is configured such that an end face on one end side (left side in Fig. 1) of a cylindrical stainless steel sieve disposed with its axis horizontal is closed and provided with a rotary shaft 41a and a filtration material introduction port 41b, while an end face on the other end side (right side in Fig. 1) is open and provided with a filtration material discharge pipe 44. The fresh water injection pipe 43 is provided such as to extend in the axial direction of the rotary sieve 41 along an outer peripheral surface of the rotary sieve and injects fresh water to the rotary sieve 41 to wash away clogging of the rotary sieve 41 and/or sludge inside the rotary sieve 41. Fresh water W3 is supplied from a fire hydrant 67 through a fresh water supply pipe 64 to the fresh water injection pipe 43. However, the fresh water W3 may be supplied from a source other than the fire hydrant 67 to the fresh water supply pipe. The rotary sieve 41 is rotationally and variably driven by a gear motor (not illustrated) via a transmission belt (not illustrated) and the rotary shaft 41a. The fresh water injection pipe 43 injects the fresh water W3 while the gear motor (not illustrated) causes slidable reciprocation in the longitudinal direction.

The drum-type cleaner 4 is provided above the water storage tank 8 and allows dirt and/or fine sand separated from the filtration material a and introduced through the filtration material introduction port 41b to permeate downward as muddy water W4 to be discharged to the muddy water tank 81 of the water storage tank 8, and allows the cleaned filtration material a to be discharged through the filtration material discharge pipe 44.

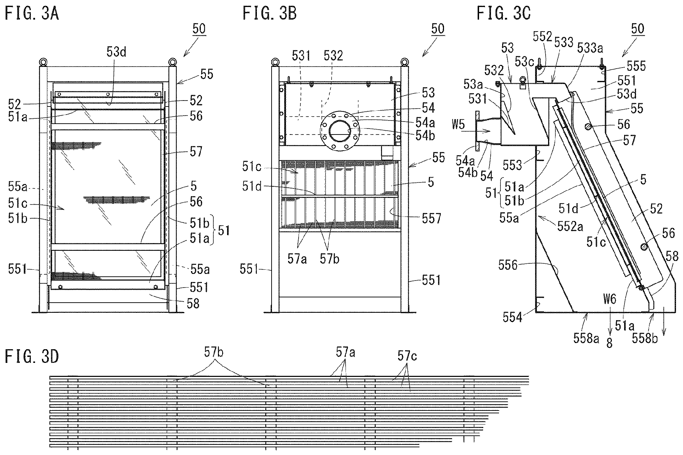

As illustrated in Fig. 3A, 3B, 3C and 3D, the inclined screen unit 50 includes an inclined screen 5 composed of mesh material, a support frame 51 having a rectangular frame shape closely fixed to a periphery of the inclined screen 5, a right and left pair of standing plates 52, 52 that are provided at both ends in the width direction of the inclined screen and guide the filtration material a sliding on the inclined screen 5, a distributor 53 that feeds the filtration material a received at a filtration material introduction port 54 through a filtration material discharge port 53d to the inclined screen 5, a casing 55 that supports all of the foregoing components, guard bars 56, 56 bridged at two, upper and lower, heights between the right and left pair of standing plates 52, 52, a covering sheet 57 that prevents scatter of the filtration material a discharged through the filtration material discharge port 53d onto the inclined screen 5, and a plate-shaped skirt 58 continuously inclined below the inclined screen to guide the filtration material a sliding down on the inclined screen 5 downward.

As illustrated in Fig. 3D, typically, the inclined screen 5 is composed of a so-called wedge wire screen in which a large number of thin wires 57a, 57a, ... made of stainless steel are arranged side by side such as to extend in the horizontal direction and also arranged side by side in the vertical direction and the thin wires 57a, 57a, ... are fixed and backed at equal intervals on a plurality of longitudinal bars 57b, 57b, ... that are provided at predetermined intervals in the horizontal direction, and has water permeable strips 57c, 57c, ... composed of a large number of laterally long through slits running horizontally between the thin wires 57a, 57a, .... For example, the inclined screen has a length of 1285 to 1500 mm, a width of 600 to 1000 mm, and each water permeable strip has a width of 0.30 to 0.35 mm.

The support frame 51 is formed by assembling lateral frames 51a, 51a and longitudinal frames 51b, 51b each composed of stainless steel mold material into a rectangular shape, with three lateral bars 51d running therethrough at appropriate positions in the vertical direction. The inclined screen 5 is placed on an upper side of the support frame 51, and the periphery of the inclined screen is welded and fixed with bolts and nuts via appropriate fittings and closely fixed to the support frame 51. Water and/or dirt that have permeated the inclined screen 5 fall through an opening 51c in the support frame 51.

The standing plates 52 are composed of stainless steel plate material and fixed to the longitudinal frames 51b of the support frame 51 by welding. The guard bars 56, 56 are composed of stainless steel pipe material and both ends thereof are welded to the right and left standing plates 52, 52.

The distributor 53 is composed of a box having a rectangular shape that is long in the horizontal direction in a rear view as illustrated in Fig. 3B and a trapezoidal shape that is widened toward downward in a vertical cross-section as illustrated in Fig. 3C.
A filtration material introduction port 54 composed of a short pipe provided with a flange 54a with bolt holes is provided in the vicinity of a lower end at a center in the right-left direction of a rear wall 53a of the distributor 53.

Also, as illustrated in Fig. 3A, in an upper end portion of a front wall 53c of the distributor 53, the filtration material discharge port 53d is provided over approximately an entire length in the right-left direction of the distributor 53 in a front view. The filtration material discharge port 53d is provided in a filtration material discharge pipe 533 composed of a flat box extending from the upper end portion of the front wall 53c of the distributor 53 at a leading end of an inclined portion 533a inclined in accordance with the inclination of the inclined screen 5.

Inside the distributor 53, a distribution plate 531 extending over an entire length in the horizontal direction (right-left direction in Fig. 3B) of an internal space of the distributor 53 extends obliquely downward and forward (right side in Fig. 3C) from an inner surface of the rear wall 53a of the distributor 53 such as to cover more than upper half of an internal passage 54b of the filtration material introduction port 54. The distribution plate 531 is supported on two triangular ribs 532.

By having such an internal structure, the distributor 53 distributes the filtration material a and feed water W5 introduced through the filtration material introduction port 54 over an entire region in the right-left direction in a rear view of the internal space of the distributor 53 while guiding downward along the distribution plate 531, and then directly guides the filtration material a and the feed water W5 upward along the front wall 53c, and evenly distributes and discharges the filtration material a and the feed water W5 in the right-left direction of the filtration material discharge port 53d.

The casing 55 includes a pair of right and left side walls 551, 551 each having a substantially right-triangular shape, and lateral bars 552, 553, 554, 555 and the skirt 58 composed of a C-channel that respectively couple the pair of side walls 551, 551 at an upper rear end portion, a middle-height rear end portion, a lower rear end portion, an upper front portion, and a lower front portion. In an interior of the side walls 551, 551, frame receivers 55a, 55a with angles fixed thereto by welding in order to place the support frame 51 thereon are provided. The distributor 53 is fitted between the lateral bars 552 and 553. A rectangular monitoring window 557 for visual monitoring of the inclined screen 5 from the rear is provided below and adjacent to the lateral bar 553, and a filtration material fall port 558b through which the filtration material a sliding down on the inclined screen 5 passes is provided in front of the skirt 58. In a bottom portion of the casing 55, a drain port 558a composed of a rectangular opening for loading water and/or dirt falling through the inclined screen 5 into the water storage tank 8 located downward is provided in rear of the skirt 58. As illustrated in Fig. 3C, an inclined plate 556 extending over an entire width in the width direction is provided at a lower rear corner inside the casing 55 such as to connect a lower edge of the monitoring window 557 and a rear edge of the drain port 558a. The inclined plate 556 guides water and/or dirt falling through the inclined screen 5 to the drain port 558a.

The covering sheet 57 is composed of rectangular plate material made of rubber, elastomer, silicone, or other flexible soft resin, preferably transparent resin such as silicone or polyvinyl chloride. An upper end portion of the covering sheet 57 is fixed with, for example, bolts and nuts to an upper wall of the filtration material discharge pipe 533 of the distributor 53, hangs down like a storefront curtain, and then comes into close contact with the inclined screen 5 to cover approximately the entire inclined screen 5. The covering sheet 57 preferably has a thickness of about 3 mm to 5 mm.

The water storage tank 8 is formed in a rectangular parallelepiped that is opened upward by welding steel plates, and, as illustrated in Fig. 1, partitioned by a partition wall 85 into the muddy water tank 81 to store muddy water and the fresh water tank 82 to store the circulating water W1 to be circulated for use. The muddy water W4 discharged from the drum-type cleaner 4 and/or drainage W6 from the inclined screen 5 as well as water mixed with the filter media A that has overflowed from the hoppers 31 to 35 of the classifying unit 3 flow into the muddy water tank 81. Clean water supplied from the fire hydrant 67 as well as supernatant water of the muddy water tank 81 flow into the fresh water tank 82 and the clean water and the supernatant water serve as the circulating water W1. The water storage tank 8 includes a drain 83 for discharging muddy water from the muddy water tank 81 and an overflow portion 84 provided such as to surround along an opening edge of the water storage tank 8 to discharge water that has overflowed from the muddy water tank and the supernatant layer.

The recycled filtration material collecting unit 9 includes a container bag 91 to collect the filtration material a delivered out of the inclined screen 5 of the inclined screen unit 50, a permeation water tank 92 to store water that has permeated the container bag 91, and a pump 24 for draining the water in the permeation water tank 92 and returning the water to the water storage tank 8.

### (Mounting Position on Truck Platform)

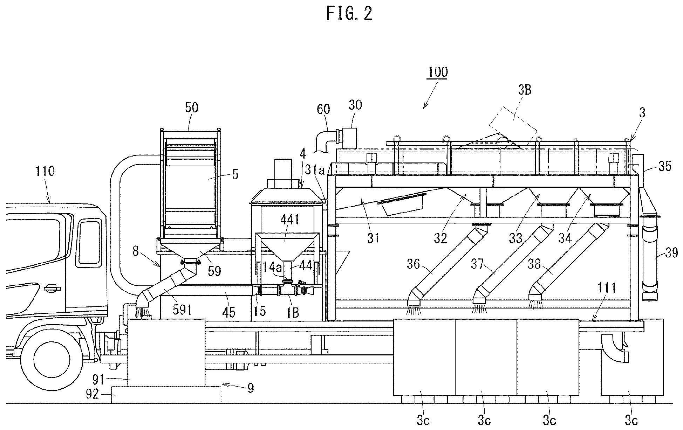

Fig. 2 illustrates a state in which the filter media recycling apparatus 100 is mounted on a platform 111 of a truck 110 when viewed from the left of the platform 111. The water storage tank 8 is placed on a front end side (left side in Fig. 2) of the platform 111. Although not illustrated, the water storage tank 8 is partitioned into the muddy water tank 81 on the left half (front side of the paper surface of Fig. 2) and the fresh water tank 82 on the right half. The inclined screen unit 50 and the drum-type cleaner 4 are placed on the muddy water tank 81 of the water storage tank 8 with the inclined screen unit 50 facing the front. Behind the water storage tank 8 (right side in Fig. 2), the classifying unit 3 is placed on the platform 111 such that the five hoppers 31 to 35 are arranged in the front-rear direction with the hopper 31 facing the front. Discharge pipes 36 to 38 extend from the respective hoppers 32 to 34 downward to the left side of the platform 111, while a discharge pipe 39 extends from the hopper 35 downward to the right side.

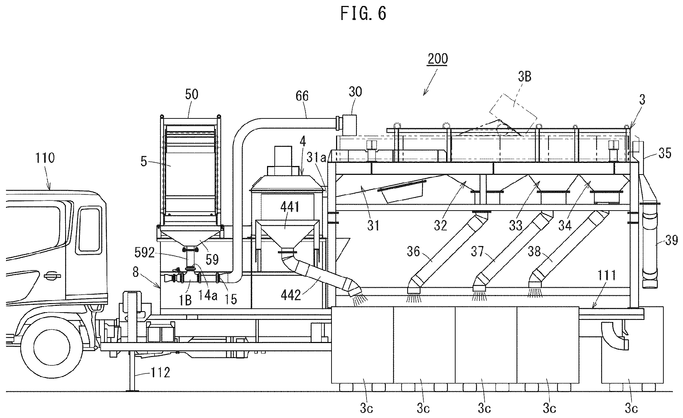

It is noted that in Fig. 2, the wheels of the truck float due to the outrigger 112 (not illustrated in Fig. 2; see Fig. 6).

The drum-type cleaner 4 is arranged with the filtration material introduction port 41b facing the right side of the platform 111 (bask side of the paper surface of Fig. 2) while the filtration material discharge pipe 44 facing the left side of the platform 111, and the inclined screen unit 50 is arranged with the inclined screen 5 facing the left side of the platform 111. The filtration material introduction port 41b of the drum-type cleaner 4 is coupled to the hopper 31 via the filtration material feed pipe 31a. A discharge hopper 441 through which the filtration material a is discharged from the drum-type cleaner 4 is provided on the left side of the drum-type cleaner 4, and the drum-type cleaner 4 is coupled to the filtration material introduction port 54 of the distributor 53 located on the back side of the inclined screen unit 50 (right side of the platform 111) via the discharge hopper 441, the filtration material discharge pipe 44, the second jet pump 1B, and the feed pipe 45. A discharge hopper 59 and a discharge pipe 591 are provided below the inclined screen unit 50 facing the left side of the platform 111, and the container bag 91 to receive the filtration material a from the discharge pipe 591 and the permeation water tank 92 to house permeation water W7 that has permeated the container bag 91 are disposed on the ground on the left side of the platform 111.

### (Actions and Effects)

Next will be described a method of operating the filter media recycling apparatus 100 according to this embodiment as well as actions and effects of each unit.

Upon regeneration of the filter media A using the filter media recycling apparatus 100, first, the first pressure pump 21 is driven to introduce pressurized water into the pressurized water introduction pipe 11 of the first jet pump 1A with the suction hose 7 inserted in the filter media A in the filtration tank X as illustrated in Fig. 1.

Then, the first jet pump 1A sucks the filter media A through the suction port 14a by the above-described action and feeds to the classifying unit 3 via the filter media feed pipe 60 while cleaning the filter media A in jet blast.

The filter media A fed to the classifying unit 3 rolls on the sieves 31A, 32A, 33A, 34A vibrated by the vibration motor 3B while being cleaned by the fresh water W3 jetted from the circulating water injection nozzles 63a, 63a to undergo classification such that the filtration material a composed of anthracite, filtration sand, etc., is classified into the hopper (a first classifying stage) 31, and the filtration gravel b is sequentially classified into the hoppers (a second classifying stages) 32, 33, 34, 35, starting from that having a smaller particle size. The filtration gravel b classified into the hoppers 32, 33, 34, 35 is housed into container bags 3c, ... via the discharge pipes 36, 37, 38, 39, respectively.

The filtration material a classified into the hopper 31 is carried from the filtration material introduction port 41b of the drum-type cleaner 4, through the filtration material feed pipe 31a, into the rotary sieve 41 and cleaned by water jetted trough the fresh water injection pipe 43 such that adhered sludge and unnecessary filtration material having a particle size smaller than the mesh of the rotary sieve are separated. The muddy water W4 containing the separated sludge permeates the rotary sieve 41 and is discharged into the muddy water tank 81. At this time, clogging of the rotary sieve 41 is cleaned by the fresh water injection pipe 43.

When the cleaning of the filtration material a by the drum-type cleaner 4 is completed, the pressurized water W2 is supplied from the second pressure pump 22 also to a pressurized water supply pipe 62 to drive the second jet pump 1B. Then, the cleaned filtration material a inside the rotary sieve 41 is sucked through the filtration material discharge pipe 44 into the second jet pump 1B and fed, together with the feed water W5 derived from the pressurized water W2, to the filtration material introduction port 54 (see Fig. 3B) in the distributor 53 of the inclined screen unit 50 through the feed pipe 45 while being cleaned by mixed air jet blast.

The filtration material a and the feed water W5 introduced from the filtration material introduction port 54 into the distributor 53 spread over an entire width in the width direction of the distributor 53 along the distribution plate 531 (see Fig. 3C) and then rise to be discharged through the filtration material discharge port 53d onto a surface (an upper surface) at an upper end of the inclined screen 5. Of the filtration material a and the feed water W5 discharged onto the surface of the inclined screen 5, the filtration material a has a particle size larger than the width of the water permeable strips 57c of the inclined screen 5 and thereby slides down on the inclined screen. The feed water W5 flows down through the water permeable strips 57c of the inclined screen 5 to below the inclined screen 5 and flows through the drain port 558a into the muddy water tank 81 of the water storage tank 8.

The covering sheet 57 prevents scatter of the filtration material a that is discharged from the filtration material discharge port 53d and slides down on the inclined screen 5. Since a lower end portion of the covering sheet 57 is in contact with the inclined screen 5 under its own weight, the lower end portion can apply its own weight to the filtration material a and effectively remove water and/or dirt from the filtration material a. The filtration material a sliding down on the inclined screen 5 is housed into the container bag 91 through the discharge hopper 59 as illustrated in Fig. 1. A small amount of permeation water W7 that has permeated the container bag 91 is stored in the permeation water tank 92 and then sent by the pump 24 to a drainage tank (not illustrated) or the water storage tank 8.

When the filtration material a cleaned by the drum-type cleaner 4 is cleaned again by the second jet pump, the filter media recycling apparatus 100 according to this embodiment thus performs feeding to the inclined screen 5 provided above the water storage tank 8 and allows drainage W6 that has permeated the inclined screen 5 to flow into the water storage tank 8, therefore it is not necessary to separately provide a large permeation water tank to store such a large amount of drainage W6.

Also, since the inclined screen 5 faces outside on the left side of the platform 111 of the truck 110, it is easy to visually monitor the filtration material a sliding down on the inclined screen 5 from outside on the left side. Since the covering sheet 57 is transparent, it is also easy to visually monitor the filtration material a underneath the covering sheet 57.

### (Second Embodiment)

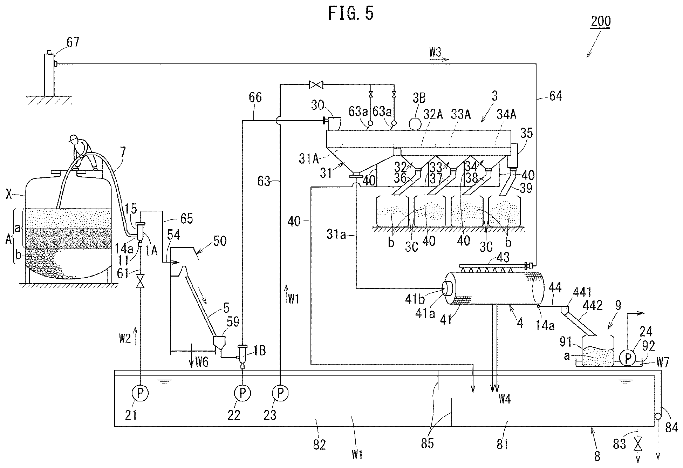

Figs. 5 and 6 illustrate a filter media recycling apparatus 200 according to a second embodiment of the present invention. In the description of the second embodiment, components common to those in the first embodiment are designated by the same reference signs and the description thereof shall be omitted.

As illustrated in Fig. 5, the filter media recycling apparatus 200 according to the second embodiment is configured such that the first jet pump 1A that sucks the filter media A from the filtration tank X feeds the filter media A through a filter media feed pipe 65 to the inclined screen unit 50. Then, the filter media A is separated from dirt through the inclined screen unit 50 and fed by the second jet pump 1B through a filter media feed pipe 66 to the classifying unit 3. After classified by the classifying unit 3 into the hopper 31 (a first classifying unit) having the finest sieve 31A, the filter media A (the filtration material a) is fed through the filtration material feed pipe 31a to the drum-type cleaner 4.

Fig. 6 illustrates a state in which the filter media recycling apparatus 200 is placed on the platform 111 of the truck 110. The filter media recycling apparatus 200 according to the second embodiment is identical to the filter media recycling apparatus 100 according to the first embodiment in positions where the drum-type cleaner 4 and the inclined screen unit 50 are placed on the water storage tank 8. In the second embodiment, the suction port 14a of the second jet pump 1B is coupled to a discharge pipe 592 hanging down from the discharge hopper 59 of the inclined screen unit 50, and the rear end opening 15 of the second jet pump 1B is coupled to the filter media load port 30 of the classifying unit 3 by the filter media feed pipe 66 such as to straddle the drum-type cleaner 4. The hopper 31 (the first classifying unit) of the classifying unit 3 is coupled to the filtration material introduction port 41b of the drum-type cleaner 4 by the filtration material feed pipe 31a, as with the first embodiment. The drum-type cleaner 4 discharges the cleaned filtration material a from the rotary sieve 41 through the discharge hopper 441 and a discharge pipe 442.

It is noted that in this embodiment, only the filtration material a is sucked from the filtration tank X, but not the filtration gravel b. Some of the filtration material a may have a size larger than the mesh of the finest sieve 31A in the classifying unit 3, which are to be sent to the subsequent coarser sieves 32A to 34A. In the above-described first embodiment, the filtration material a classified into the sieves 32A to 34A does not pass through the second jet pump 1B and thus is cleaned only once. In contrast, in this embodiment, particles have increased sizes including adhered dirt and thus not classified into the hopper 31 (the first classifying unit), to which they are supposed to be classified, but pass through the first and second jet pumps 1A, 1B before reaching the classifying unit 3, whereby the filtration material a classified into the sieves 32A to 34A is also cleaned twice. The filtration material a classified into the sieves 32A to 34A are collected before the filtration gravel b is subsequently sucked and cleaned/classified. It is noted that when cleaning/classifying the filtration gravel b, it is preferable to provide a bypass flow path (not illustrated) that directly connects the first jet pump 1A and the classifying unit 3 and directly feeds the filtration gravel b from the filtration tank X to the classifying unit 3. This eliminates the need for cleaning the filtration gravel b twice which does not need to be cleaned twice.

The above-described filter media recycling apparatus according to the present invention is not limited to the embodiments described above, and the jet pump does not have to include an intake port and thus does not have to be a mixed air jet pump, for example. The inclined screen does not have to include laterally extending water permeable strips but may instead include water permeable holes composed of a large number of through holes by weaving longitudinal and lateral wire rods, for example. The inclined screen unit does not have to include covering sheet. The covering sheet does not have to be transparent. Also, the inclined screen may face inward of the platform of the truck, rightward of the platform of the truck, or rearward.

## Claims

1. A filter media recycling apparatus comprising:
a water storage tank 8;
first and second pressure pumps 21, 22 that suck and pressurize water stored in the water storage tank;
a first jet pump 1A driven by drive water pressurized by the first pressure pump to suck and feed to-be-recycled filter media from a filtration tank X to a downstream side;
a classifying unit 3 having a plurality of classifying stages that classifies the filter media;
a drum-type cleaner 4 having a cylindrical rotary sieve that receives the filter media classified by the classifying unit therein and cleans the filter media with water while rotating about an axis; and
a second jet pump 1B driven by drive water pressurized by the second pressure pump to suck and feed the filter media to the downstream side; **characterized by**:
an inclined screen 5 that separates water and dirt from the filter media;
wherein the inclined screen is inclined such as to allow the filter media to slide down on an upper surface thereof, a large number of water permeable holes composed of through holes or a large number of water permeable strips composed of through slits are dispersedly arranged in the inclined screen, the inclined screen is provided above the water storage tank such that water falling through the water permeable holes or the water permeable strips flows into the water storage tank.

2. The filter media recycling apparatus according to claim 1, wherein:
the first jet pump feeds the filter media to the classifying unit;
the classifying unit classifies the filter media fed from the first jet pump;
the second jet pump sucks and feeds the filter media cleaned by the drum-type cleaner to the inclined screen; and
the inclined screen separates water and dirt from the filter media fed by the second jet pump.

3. The filter media recycling apparatus according to claim 1, wherein:
the first jet pump feeds the filter media to the inclined screen;
the inclined screen separates water and dirt from the filter media fed by the first jet pump;
the second jet pump sucks and feeds the filter media fed from the inclined screen to the classifying unit; and
the classifying unit classifies the filter media fed from the second jet pump.

4. The filter media recycling apparatus according to claim 1, 2 or 3, wherein the inclined screen comprises a covering sheet composed of flexible material capable of covering at least an upstream side portion of the upper surface from above the filter media sliding on the upper surface.

5. The filter media recycling apparatus according to claim 4, wherein the covering sheet is composed of transparent material.

6. The filter media recycling apparatus according to claim 1, 2 or 3, wherein the water storage tank, the first and second pressure pumps, the first and second jet pumps, the classifying unit, the drum-type cleaner, and the inclined screen are mounted on a platform of a truck, and the inclined screen is inclined outward in a plan view of the platform.
